# EUROPEAN PATENT SPECIFICATION

(11) **EP 2 465 732 B1**
(45) Date of publication and mention of the grant of the patent: **03.07.2013**
(21) Application number: 10195371.9
(22) Date of filing: 16.12.2010
(51) Int. Cl.: B60R 7/04

(54) **Vehicle centre console**
Zentrale Fahrzeugkonsole
Console de centre de véhicule

(43) Date of publication of application: 20.06.2012
(73) Proprietor: Volvo Car Corporation, 40 531 Göteborg (SE)
(72) Inventor: Disley, Jonathan, 44244, Kungälv (SE)

(56) References cited:
- GB-A- 2 468 566
- JP-A- 2002 059 786
- JP-A- 2003 267 146
- JP-A- 2005 170 094
- JP-U- H0 558 490

## Description

### TECHNICAL FIELD

The present invention relates to a vehicle centre console arranged to be mounted in a vehicle so as to extend in the longitudinal direction of the vehicle. This vehicle centre console comprises a base member and a holding member. The holding member, which is attached to and supported by the base member, is configured for holding objects, such as CD-cases, cups etc., placed therein.

### BACKGROUND OF THE INVENTION

When constructing vehicle centre consoles, there are high demands on, inter alia, multi use abilities, appealing design and smart functionality at low costs. During construction, problems can arise regarding design of the file and storage systems and expensive mechanical functions as well as regarding use of multiple parts and use of many different parts.

JP H05 58 490 U reveals one example of centre console configured for holding various objects according to the preamble of claim 1.

### SUMMARY OF THE INVENTION

The primary object of the vehicle centre console according to the present invention is to provide a file or storage system with the possibility to be opened and closed for holding items such as CD-cases and cups of coffee or tea and to extend the structure therefor around e.g. the gear lever and thereby eliminate many parts. Parts that can be deleted are, inter alia, the gear gator, main console plastic shroud, cup holder and jalousie, hinges for storage area etc.. The design can be extended to the rear compartment and forward to the dashboard. With an appropriate design, it is also possible to reduce the number of fixtures like screws and clips.

The above object is achieved according to the present invention by presenting a vehicle centre console having the features of claim 1. objects, said compartment being variable in width owing to the elasticity of said elongated, elastic flaps or tongues.

The vehicle centre console according to the present invention is thereby given a simple, reliable and attractive design, reflecting modern and functional techniques.

Furthermore, construction time and the number of parts are reduced, and thereby the costs.

### BRIEF DESCRIPTION OF THE DRAWINGS

The present invention will be further described below by way of example only and with reference to the accompanying drawing, in which
Fig. 1 is a schematic top plan and perspective illustration of a part of a first embodiment of a vehicle centre console according to the invention.
Fig. 2 is a schematic top plan view of a part of a second embodiment of the vehicle centre console according to the invention.
Fig. 3 is a schematic side view of the embodiment of Fig. 2.
Fig. 4 is a schematic cross-sectional view of a third embodiment of the vehicle centre console according to the invention.
Fig. 5 is a schematic perspective view of an example of a vehicle centre console not corresponding to the invention.

### DETAILED DESCRIPTION OF PREFERRED EMBODIMENTS

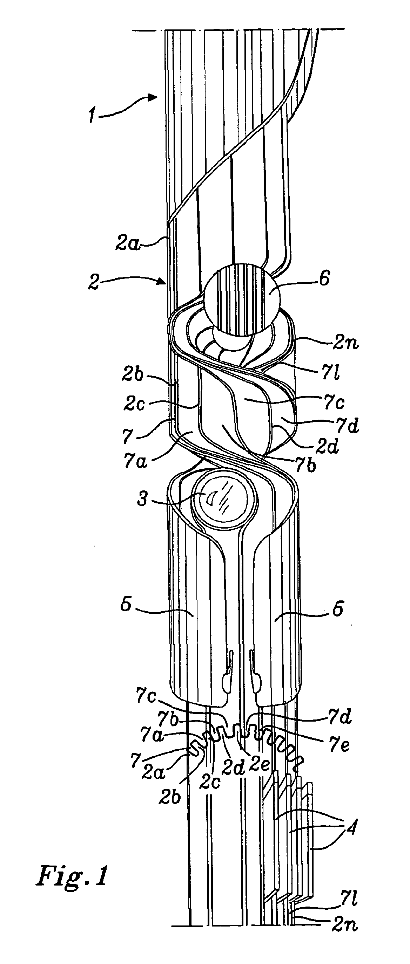

The vehicle centre console according to the present invention is adapted to be mounted in a vehicle so as to extend in the longitudinal direction of a vehicle. As is apparent from the drawings, the console comprises a base member 1 and a holding member 2. The holding member 2 is configured for holding objects placed therein, e.g. a cup 3 of coffee or tea and/or a CD-case 4 (see Fig. 1-3). The holding member 2 is attached to and supported by the base member 1. The holding member 2 can be attached to and supported by the base member 1 in many ways, of which some are described below. Although not illustrated in the drawings, the base and holding members 1, 2 may be configured to extend from the dashboard of the vehicle to the back rests of the front seats. The base and holding members 1, 2 may alternatively be configured to extend from the dashboard to the rear seats or even to the back rests of the rear seats. The base and holding members 1, 2 may also be configured to have any other suitable length. The part of the base member 1 of the vehicle centre console illustrated in Fig. 1 further comprises arm rests 5 for driver and passenger in the front seats. These arm rests 5 are configured for folding around the holding member 2 when used and are therefore attached to the base member 1 in a suitable manner, e.g. by means of hinges (not shown). Finally, a gear lever 6 is shown (see Fig. 1-3), protruding upwards from the base and holding members 1, 2.

The holding member 2 of the vehicle centre console may be configured in many different ways. In principal, the holding member comprises at least one elongated, elastic member 2. This elongated, elastic member 2 extends along substantially the entire length of the base member 1. The elongated, elastic member 2 is further configured to define at least a part of at least one compartment 7 for one or more objects, such as the above-mentioned cups and/or CD-cases 4. Since the holding member 2 is elastic, the compartment 7 is variable in width for accommodating the objects placed therein. The elasticity also ensures that the objects are held in a firm grip in the compartment 7.

In a first, most simple embodiment, not illustrated in the drawings, the elongated, elastic member 2 comprises one elongated, substantially upwardly directed elastic flap or tongue. This flap or tongue is configured to define between itself and the base member 1 one or more upwardly open compartments for objects 3, 4. This compartment or these compartments is/are variable in width owing to the elasticity of said elongated, elastic flap or tongue. The one or more compartments may also vary in depth and/or length. This can be realized e.g. by providing or configuring one or both sides of the elongated, elastic flap or tongue with e.g. burls, with vertically or horizontally directed flanges of various extension or with elevations of other types. Furthermore, the height of the elongated, elastic flap or tongue in this and in all other embodiments of the invention described hereinafter, must be sufficient for defining compartment or compartments having the desired depth, i.e. the height may vary as long as the compartment or compartments defined by means of the flap or tongue is/are sufficiently deep to provide a safe and firm grip of the objects placed therein and yet not so deep that it will be difficult to remove the objects.

In another embodiment, or as a complement to the first embodiment, illustrated in Fig. 1-4, the elongated, elastic member 2 comprises two or more elongated, substantially upwardly directed elastic flaps or tongues 2a, 2b, 2c,..., 2n. These flaps or tongues 2a, 2b, 2c,..., 2n are configured to define between them one or more upwardly open compartments 7, 7a, 7b,..., 7l for objects 3, 4. Once again, the compartments 7, 7a, 7b,..., 7l are variable in width owing to the elasticity of the elongated, elastic flaps or tongues 2a, 2b, 2c,..., 2n.

For optimum function and as illustrated in Fig. 1-4, at least the major part of the elongated, elastic flaps or tongues 2a, 2b, 2c,..., 2n extend substantially parallel to each other in the longitudinal direction of the holding member 2, defining between them one or more compartments 7, 7a, 7b,..., 7l with a variable width for objects 3, 4. It is important that the elongated, elastic flaps or tongues 2a, 2b, 2c,..., 2n have this parallel orientation at such distance from each other or that the elasticity is such that a firm grip of the objects 3, 4 is achieved. Accordingly, the distance and/or elasticity may vary depending on the object or objects to be held. The distance between adjacent elongated, elastic flaps or tongues 2a, 2b, 2c,..., 2n may also be determined e.g. by the height of the elevations on the sides of the flaps or tongues.

In the embodiments illustrated in Fig. 1-4, the elongated, elastic flaps or tongues 2a, 2b, 2c,..., 2n extend along substantially the entire length of the holding member 2, such that the available space between the flaps or tongues for providing compartments 7, 7a, 7b,..., 7l with a variable width becomes as large as possible.

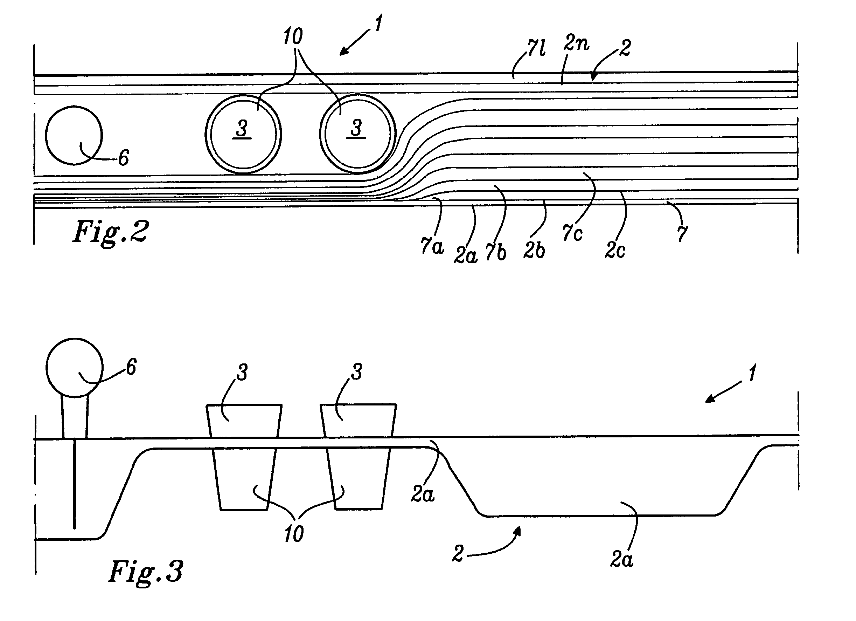

As is apparent from particularly Fig. 1-3, the shape and number of variable compartments 7, 7a, 7b,..., 7l may vary from one embodiment to another. Thus, as indicated above, at least one compartment 7, 7a, 7b,..., 7l with a variable width may be defined between respective two elongated, elastic flaps or tongues 2a, 2b, 2c,..., 2n. This compartment 7, 7a, 7b,..., 7l may extend along substantially the entire length of the holding member 2. As mentioned above, the width of the compartment 7, 7a, 7b,..., 7l may vary in its longitudinal direction depending on the type of object 3, 4 to be held in the compartment. Depending on the type of object 3, 4 to be held in the compartment 7, 7a, 7b,..., 7l, the depth and/or length of the compartment may also vary in its longitudinal direction. In Fig. 1, this is illustrated by the depth of the compartments 7, 7a, 7b,..., 7l for the CD-cases 4 at the bottom of the drawing, where the cross-section of the holding member 2 is similar to that of a gear wheel. It is obvious that the compartment or compartments 7, 7a, 7b,..., 7l for a cup 3 must be at least deeper than the compartments for the CD-cases 4. It should further be noted that if, as illustrated in Fig. 2 and 3, the elongated, elastic flaps or tongues 2a, 2b, 2c,..., 2n all pass on one side of one or more cups 3 or separate compartments 10 for cups in the base member 1, the flaps or tongues may, at the portions thereof passing these cups or compartments, be thinner in the sense that the height thereof is smaller than the height of the rest of the flaps or tongues in order to improve the elasticity of these portions. The portions of the elongated, elastic flaps or tongues 2a, 2b, 2c,..., 2n passing the cups 3 or compartments 10 on one side thereof have e.g. a height of about 10-30% of the height of the rest of the flaps or tongues. The reason for improving the elasticity of these portions is apparent from Fig. 2, in which it is illustrated how much some of the elongated, elastic flaps or tongues are displaced for enabling passage of all flaps or tongues on one side of the cups 3 or the compartments 10 therefor.

Alternatively, two or more compartments with a variable width may be defined between respective two elongated, elastic flaps or tongues 2a, 2b, 2c,..., 2n, i.e. the compartment 7, 7a, 7b,..., 7l between respective two flaps or tongues may be divided into two or more compartments, separated by sections of varying length. These compartments are also variable in width depending on the type of object 3, 4 to be held in the compartments. Depending on the type of object 3, 4 to be held in the compartments, the depth and/or length of the compartments may also vary. Compartments of varying depth and/or length are defined at different locations along the holding member 2 dependent on their intended use. These compartments may be defined, i.e. the sections separating the compartments may be formed, as mentioned above, by providing or configuring one or both sides of each or at least every second elongated, elastic flap or tongue with elevations of any suitable type.

Irrespective of whether there is one or there are two or more compartments 7, 7a, 7b,..., 7l with a variable width between respective two elongated, elastic flaps or tongues 2a, 2b, 2c,..., 2n, this compartment or these compartments may also vary in depth and/or length, i.e. the one or more compartments with a variable width between two adjacent flaps or tongues may vary in depth and/or length compared to the one or more compartments with a variable width between two other adjacent flaps or tongues.

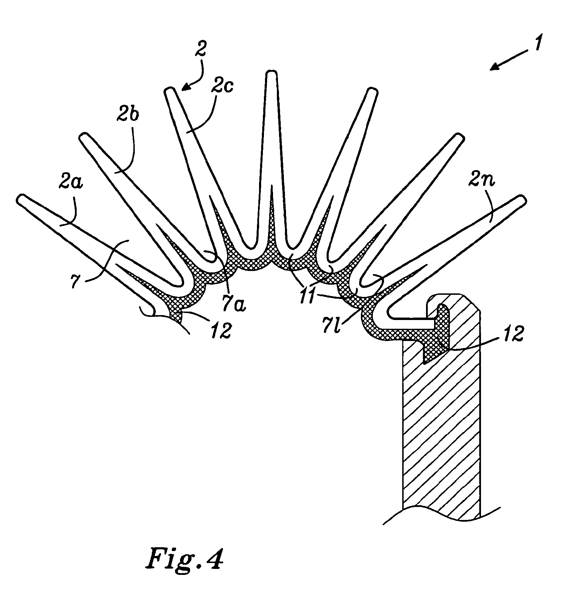

Irrespective of whether there is one or there are two or more compartments 7, 7a, 7b,..., 7l with a variable width and/or varying depth and/or length between respective two elongated, elastic flaps or tongues 2a, 2b, 2c,..., 2n, this compartment or these compartments may further be defined by a bottom portion 11, forming part of the elongated, elastic member 2 and connecting the elongated, elastic flaps or tongues to each other in the longitudinal direction thereof, as illustrated particularly in Fig. 4, or be defined without such a bottom portion. Without a bottom portion 11, the base member 1 may define a bottom to the compartment or compartments, with or without longitudinal physical attachment to the elongated, elastic flaps or tongues 2a, 2b, 2c,..., 2n defining the compartment or compartments. With or without the bottom portion 11, the elongated, elastic flaps or tongues 2a, 2b, 2c,..., 2n may be connected to each other at the ends thereof by means of a connecting portion, which e.g. forms a part of the elongated, elastic member 2 and which in turn is attached to the base member 1, or is e.g. each elongated, elastic flap or tongue attached, at the ends thereof, directly to the base member. Accordingly, this endwise connection to the base member 1 may also be used in embodiments where a bottom portion 11 is found between respective two elongated, elastic flaps or tongues 2a, 2b, 2c,..., 2n, since the base member 1 thereby need not define a bottom to the compartment or compartments and thus, need not give support to the holding member 2 along the entire length thereof. Furthermore, as is illustrated in Fig. 4, the elongated, elastic flaps or tongues 2a, 2b, 2c,..., 2n and the bottom portion 11, when present, may be configured with a reinforcement 12 for strengthening the structure of the elongated, elastic flaps or tongues. This reinforcement 12 is also suitable for facilitating the attachment of the holding member 2 to the base member 1, as is illustrated in Fig. 4, where the holding member is supported in its longitudinal direction by a substantially U-shaped base member.

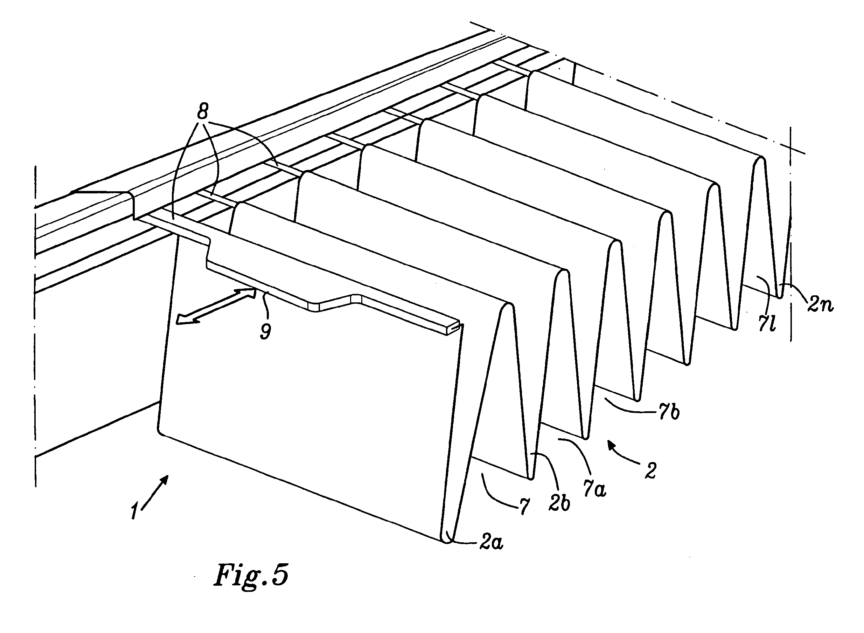

According to an example not corresponding to the invention, illustrated in Fig. 5, the elongated, elastic flaps or tongues 2a, 2b, 2c,..., 2n may extend substantially parallel to each other in a direction substantially transverse to the longitudinal direction of the holding member 2, defining between them one or more compartments 7, 7a, 7b,..., 7l with a variable width for objects, e.g. CD-cases 4. In the example of Fig. 5, the flaps or tongues 2a, 2b, 2c,..., 2n are defined by a continuous piece of elastic material which is folded like a pair of bellows, defining upwardly open compartments 7, 7a, 7b,..., 7l. The holding member 2 is in its longitudinal direction supported by the base member 1, which in the embodiment of Fig. 5 is substantially U-shaped. The holding member 2 is suspended in the base member 1 by means of e.g. attachments 8 which may be displaceable in lateral grooves in the upper part of the shanks of the substantially U-shaped base member. A magnetic lock 9 holds the holding member 2 in such position in the base member 1, that a safe grip of the objects, e.g. the CD-cases 4 in the compart-ments 7, 7a, 7b,..., 7l, and easy access thereto, is achieved. It should be noted however, that the elongated, elastic transverse flaps or tongues 2a, 2b, 2c,..., 2n may be defined in other ways, e.g. by means of an elongated, elastic member 2 which is not made in one piece. Instead, the elongated, elastic member 2 may comprise a number of separate, transverse flaps or tongues which at their ends are fixedly attached to the shanks of the substantially U-shaped base member 1, e.g. fixedly mounted in the above-mentioned lateral grooves by means of attachments 8, such that they thereby define one or more upwardly open compartments with a variable width between the flaps or tongues for achieving a safe grip of objects in the compartments. The web of the substantially U-shaped base member 1 may then also define a bottom to the compartment or compart-ments, whereby the height of the elongated, elastic flaps or tongues defining the one or more compartments may correspond to or be somewhat below the height of the shanks of the substantially U-shaped base member. The elongated, elastic flaps or tongues may be attached to the web of the substantially U-shaped base member 1 in any suitable manner, i.e. attachment is achieved in the longitudinal direction of the flaps or tongues. The compartments 7, 7a, 7b,..., 7l with a variable width between the elongated, elastic flaps or tongues 2a, 2b, 2c,..., 2n may also vary in depth and/or length e.g. by, as defined above, providing or configuring one or both sides of each or at least every second elongated, elastic flap or tongue with elevations of any suitable type.

Various combinations of elongated, elastic flaps or tongues which extend primarily in the longitudinal direction of the holding member 2 and elongated, elastic flaps or tongues which extend transverse to the longitudinal direction of the holding member are also possible. Thus, one or more of the elongated, elastic flaps or tongues extend substantially parallel to each other in the longitudinal direction of the holding member 2 and one or more other flaps or tongues extend substantially parallel to each other in a direction substantially transverse to the longitudinal direction of the holding member.

The elongated, elastic flaps or tongues 2a, 2b, 2c,..., 2n are made of a material which is suitable for the intended purpose. The material must e.g. be sufficiently elastic for being able to hold objects 3, 4 of varying width and, after removal of the object, being able to return to its original position. The material should also be sufficiently elastic for being able to bring it to extend around e.g. the gear lever 6 protruding upwards from the base and holding members 1, 2, on either side of the gear lever or all elongated, elastic flaps or tongues 2a, 2b, 2c,..., 2n on one side thereof. In the illustrated embodiments, the elongated, elastic flaps or tongues 2a, 2b, 2c,..., 2n are made of rubber, but any other material having e.g. substantially the same coefficient of elasticity and the same high coefficient of friction as rubber can be used. If present, the reinforcements 12 in the elongated, elastic flaps or tongues 2a, 2b, 2c,..., 2n may consist of a plastic, e.g. nylon, or a similar material with the required reinforcing properties.

It will be evident to a skilled person that the vehicle centre console according to the present invention can be modified and altered within the scope of the subsequent claims without departing from the idea and purpose of the invention. Thus, the base member 1 can be configured in other ways than as shown in the drawing. The purpose of the base member 1 is to give support to the holding member 2 and this can be done in many ways. Support need not mean that the base member 1 has to have exactly the same extension as the holding member 2, i.e. the holding member can e.g. be supported locally, at certain strategic points in its longitudinal direction. This will require that the holding member 2 has a certain inherent structural stability. The design of the holding member 2 must also be adapted to the design of the base member 1 and the support the base member gives to the holding member.

## Claims

1. Vehicle centre console, arranged to be mounted in a vehicle so as to extend in the longitudinal direction of the vehicle and comprising a base member (1) and a holding member (2) which is attached to and supported by said base member, said holding member being configured for holding objects (3, 4) placed therein, the holding member comprises at least one elongated, elastic member (2) which extends along substantially the entire length of the base member (1) and which is configured to define at least a part of at least one compartment (7, 7a, 7b,..., 7l) for one or more objects (3, 4), said compartment being variable in width owing to the elasticity of said elongated, elastic member, the elongated, elastic member (2) comprising two or more elongated, substantially upwardly directed elastic flaps or tongues (2a, 2b, 2c,..., 2n), said flaps or tongues being configured to define between them one or more upwardly open compartments (7, 7a, 7b,..., 71) for objects (3, 4), said compartments being variable in width owing to the elasticity of said elongated, elastic flaps or tongues **characterized in that** at least the major part of said elongated, elastic flaps or tongues (2a, 2b, 2c,..., 2n) extend substantially parallel to each other in the longitudinal direction of the holding member (2).

2. Vehicle centre console according to claim 1, **characterized in that** the elongated, elas-tic member (2) comprises at least one elongated, substantially upwardly directed elastic flap or tongue, said flap or tongue being configured to define between itself and the base member (1) one or more upwardly open compartments for objects (3, 4), said compart-ments being variable in width owing to the elasticity of said elongated, elastic flap or tongue.

3. Vehicle centre console according to claim 1 or 2, **characterized in that** at said elongated, elastic flaps or tongues (2a, 2b, 2c,..., 2n) extend along substantially the entire length of the holding member (2).

4. Vehicle centre console according to any one of claims 1-3, **characterized in that** at least one compartment (7, 7a, 7b,..., 7l) is defined between respective two elongated, elastic flaps or tongues (2a, 2b, 2c,..., 2n), said compartment being variable in width owing to the elasticity of said elongated, elastic flaps or tongues.

5. Vehicle centre console according to claim 4, **characterized in that** said at least one compartment (7, 7a, 7b,..., 7l) extends along substantially the entire length of the holding member (2).

6. Vehicle centre console according to any one of claims 1-5, **characterized in that** two or more compartments are defined between respective two elongated, elastic flaps or ton-gues (2a, 2b, 2c,..., 2n), said compartments being variable in width owing to the elasticity of said elongated, elastic flaps or tongues.

7. Vehicle centre console according to claim 1, **characterized in that** at least the major part of one or more elongated, elastic flaps or tongues extend substantially parallel to each other in the longitudinal direction of the holding member (2) and that one or more other elongated, elastic flaps or tongues extend substantially parallel to each other in a direction substantially transverse to the longitudinal direction of the holding member.

8. Vehicle centre console according to any one of claims 1-7, **characterized in that** said one, two or more elongated, elastic flaps or tongues (2a, 2b, 2c,..., 2n) is/are made of rubber.

9. Vehicle centre console according to any one of claims 1-8, **characterized in that** said one, two or more elongated, elastic flaps or tongues (2a, 2b, 2c,..., 2n) is/are configured with reinforcements (12).

10. Vehicle centre console according to any one of claims 1-9, **characterized in that** said one, two or more elongated, elastic flaps or tongues (2a, 2b, 2c,..., 2n) is/are attached to the base member (1) through the ends of said flaps or tongues.

11. Vehicle centre console according to any one of claims 1-10, **characterized in that** said one, two or more elongated, elastic flaps or tongues (2a, 2b, 2c,..., 2n) is/are attached to the base member (1) in the longitudinal direction of said flaps or tongues.

12. Vehicle centre console according to any one of claims 1-11, **characterized in that** the base and holding members (1, 2) are configured to extend from the dashboard to the back rests of the front seats.

13. Vehicle centre console according to any one of claims 1-11, **characterized in that** the base and holding members (1, 2) are configured to extend from the dashboard to the rear seats.

14. Vehicle centre console according to any one of claims 1-11, **characterized in that** the base and holding members (1, 2) are configured to extend from the dashboard to the back rests of the rear seats.

15. Vehicle centre console according to any one of claims 1-14, **characterized in that** the base member (1) comprises arm rests (5) for driver and passenger in the front seats, said arm rests being configured for folding around the holding member (2).

## Patentansprüche

1. Fahrzeugmittelkonsole, die dazu angeordnet ist, so in einem Fahrzeug befestigt zu werden, dass sie sich in der Längsrichtung des Fahrzeugs erstreckt, und ein Basisglied (1) und ein Halteglied (2), das am Basisglied angebracht ist und durch das Basisglied gestützt wird, umfasst, wobei das Halteglied dazu konfiguriert ist, darin platzierte Gegenstände (3, 4) zu halten, wobei das Halteglied mindestens ein längliches elastisches Glied (2) umfasst, das sich entlang im Wesentlichen der gesamten Länge des Basisglieds (1) erstreckt und das dazu konfiguriert ist, mindestens einen Teil mindestens eines Fachs (7, 7a, 7b, ..., 71) für einen oder mehrere Gegenstände (3, 4) zu definieren, wobei die Breite des Fachs aufgrund der Elastizität des länglichen elastischen Glieds variieren kann, wobei das längliche elastische Glied (2) zwei oder mehr längliche im Wesentlichen nach oben gerichtete elastische Klappen oder Laschen (2a, 2b, 2c, ..., 2n) umfasst, wobei die Klappen oder Laschen dazu konfiguriert sind, zwischen sich ein oder mehrere nach oben offene Fächer (7, 7a, 7b, ..., 71) für Gegenstände (3, 4) zu definieren, wobei die Breite der Fächer aufgrund der Elastizität der länglichen elastischen Klappen oder Laschen variieren kann, **dadurch gekennzeichnet, dass** sich zumindest der überwiegende Teil der länglichen elastischen Klappen oder Laschen (2a, 2b, 2c, ..., 2n) in der Längsrichtung des Halteglieds (2) im Wesentlichen parallel zueinander erstreckt.

2. Fahrzeugmittelkonsole nach Anspruch 1, **dadurch gekennzeichnet, dass** das längliche elastische Glied (2) mindestens eine längliche, im Wesentlichen nach oben ausgerichtete elastische Klappe oder Lasche umfasst, wobei die Klappe oder Lasche dazu konfiguriert ist, zwischen sich und dem Basisglied (1) ein oder mehrere nach oben offene Fächer für Gegenstände (3, 4) zu definieren, wobei die Breite der Fächer aufgrund der Elastizität der länglichen elastischen Klappe oder Lasche variieren kann.

3. Fahrzeugmittelkonsole nach Anspruch 1 oder 2, **dadurch gekennzeichnet, dass** sich die länglichen elastischen Klappen oder Laschen (2a, 2b, 2c, ..., 2n) entlang im Wesentlichen der gesamten Länge des Halteglieds (2) erstrecken.

4. Fahrzeugmittelkonsole nach einem der Ansprüche 1-3, **dadurch gekennzeichnet, dass** mindestens ein Fach (7, 7a, 7b, ..., 71) zwischen jeweils zwei länglichen, elastischen Klappen oder Laschen (2a, 2b, 2c, ..., 2n) definiert ist, wobei die Breite des Fachs aufgrund der Elastizität der länglichen elastischen Klappen oder Laschen variieren kann.

5. Fahrzeugmittelkonsole nach Anspruch 4, **dadurch gekennzeichnet, dass** sich das mindestens eine Fach (7, 7a, 7b, ..., 71) entlang im Wesentlichen der gesamten Länge des Halteglieds (2) erstreckt.

6. Fahrzeugmittelkonsole nach einem der Ansprüche 1-5, **dadurch gekennzeichnet, dass** zwei oder mehr Fächer zwischen jeweils zwei länglichen, elastischen Klappen oder Laschen (2a, 2b, 2c, ..., 2n) definiert sind, wobei die Breite der Fächer aufgrund der Elastizität der länglichen elastischen Klappen oder Laschen variieren kann.

7. Fahrzeugmittelkonsole nach Anspruch 1, **dadurch gekennzeichnet, dass** sich zumindest der überwiegende Teil einer oder mehrerer länglicher elastischer Klappen oder Laschen in der Längsrichtung des Halteglieds (2) im Wesentlichen parallel zueinander erstreckt und dass sich eine oder mehrere weitere längliche elastische Klappen oder Laschen in einer zur Längsrichtung des Halteglieds im Wesentlichen quer verlaufenden Richtung im Wesentlichen parallel zueinander erstreckt/erstrecken.

8. Fahrzeugmittelkonsole nach einem der Ansprüche 1-7, **dadurch gekennzeichnet, dass** die eine, zwei oder mehreren länglichen elastischen Klappen oder Laschen (2a, 2b, 2c, ..., 2n) aus Kautschuk hergestellt ist/sind.

9. Fahrzeugmittelkonsole nach einem der Ansprüche 1-8, **dadurch gekennzeichnet, dass** die eine, zwei oder mehreren länglichen elastischen Klappen oder Laschen (2a, 2b, 2c, ..., 2n) mit Verstärkungen (12) konfiguriert ist/sind.

10. Fahrzeugmittelkonsole nach einem der Ansprüche 1-9, **dadurch gekennzeichnet, dass** die eine, zwei oder mehreren länglichen elastischen Klappen oder Laschen (2a, 2b, 2c, ..., 2n) über die Enden der Klappen oder Laschen am Basisglied (1) angebracht ist/sind.

11. Fahrzeugmittelkonsole nach einem der Ansprüche 1-10, **dadurch gekennzeichnet, dass** die eine, zwei oder mehreren länglichen, elastischen Klappen oder Laschen (2a, 2b, 2c, ..., 2n) in der Längsrichtung der Klappen oder Laschen am Basisglied (1) angebracht ist/sind.

12. Fahrzeugmittelkonsole nach einem der Ansprüche 1-11, **dadurch gekennzeichnet, dass** das Basisglied (1) und das Halteglied (2) dazu konfiguriert sind, sich vom Armaturenbrett zu den Rückenlehnen der Vordersitze zu erstrecken.

13. Fahrzeugmittelkonsole nach einem der Ansprüche 1-11, **dadurch gekennzeichnet, dass** das Basisglied (1) und das Halteglied (2) dazu konfiguriert sind, sich vom Armaturenbrett zu den Rücksitzen zu erstrecken.

14. Fahrzeugmittelkonsole nach einem der Ansprüche 1-11, **dadurch gekennzeichnet, dass** das Basisglied (1) und das Halteglied (2) dazu konfiguriert sind, sich vom Armaturenbrett zu den Rückenlehnen der Rücksitze zu erstrecken.

15. Fahrzeugmittelkonsole nach einem der Ansprüche 1-14, **dadurch gekennzeichnet, dass** das Basisglied (1) Armlehnen (5) für Fahrer und Beifahrer auf den Vordersitzen umfasst, wobei die Armlehnen dazu konfiguriert sind, um das Halteglied (2) herum zu klappen.

## Revendications

1. Console de centre de véhicule, prévue pour être montée dans un véhicule de manière à s'étendre dans la direction longitudinale du véhicule et comprenant un organe de base (1) et un organe de retenue (2) qui est attaché audit organe de base et supporté par celui-ci, ledit organe de retenue étant configuré pour retenir des objets (3, 4) placés à l'intérieur de celui-ci, l'organe de retenue comprenant au moins un organe élastique allongé (2) qui s'étend le long de substantiellement toute la longueur de l'organe de base (1) et qui est configuré pour définir au moins une partie d'au moins un compartiment (7, 7a, 7b,..., 71) pour un ou plusieurs objets (3, 4), ledit compartiment ayant une largeur variable du fait de l'élasticité dudit organe élastique allongé, l'organe élastique allongé (2) comprenant deux ou plus de deux volets ou languettes élastiques allongés orientés substantiellement vers le haut (2a, 2b, 2c, ..., 2n), lesdits volets ou languettes étant configurés pour définir entre eux un ou plusieurs compartiments ouverts vers le haut (7, 7a, 7b, ..., 71) pour des objets (3, 4), lesdits compartiments ayant une largeur variable du fait de l'élasticité desdits volets ou languettes élastiques allongés, **caractérisée en ce qu'**au moins la majeure partie desdits volets ou languettes élastiques allongés (2a, 2b, 2c, ..., 2n) s'étendent substantiellement parallèlement les uns aux autres dans la direction longitudinale de l'organe de retenue (2).

2. Console de centre de véhicule selon la revendication 1, **caractérisée en ce que** l'organe élastique allongé (2) comprend au moins un volet ou une languette élastique allongé, orienté substantiellement vers le haut, ledit volet ou languette étant configuré pour définir entre lui et l'organe de base (1) un ou plusieurs compartiments ouverts vers le haut pour des objets (3, 4), lesdits compartiments ayant une largeur variable du fait de l'élasticité dudit volet ou languette élastique allongé.

3. Console de centre de véhicule selon la revendication 1 ou 2, **caractérisée en ce que** lesdits volets ou languettes élastiques allongés (2a, 2b, 2c, ..., 2n) s'étendent le long de substantiellement toute la longueur de l'organe de retenue (2).

4. Console de centre de véhicule selon l'une quelconque des revendications 1 à 3, **caractérisée en ce qu'**au moins un compartiment (7, 7a, 7b, ..., 71) est défini entre deux volets ou languettes respectifs élastiques allongés (2a, 2b, 2c,...,2n), ledit compartiment ayant une largeur variable du fait de l'élasticité desdits volets ou languettes élastiques allongés.

5. Console de centre de véhicule selon la revendication 4, **caractérisée en ce que** ledit au moins un compartiment (7, 7a, 7b,..., 71) s'étend le long de substantiellement toute la longueur de l'organe de retenue (2).

6. Console de centre de véhicule selon l'une quelconque des revendications 1 à 5, **caractérisée en ce que** deux ou plus de deux compartiments sont définis entre deux volets ou languettes respectifs élastiques allongés (2a, 2b, 2c, ..., 2n), lesdits compartiments ayant une largeur variable du fait de l'élasticité desdits volets ou languettes élastiques allongés.

7. Console de centre de véhicule selon la revendication 1, **caractérisée en ce qu'**au moins la majeure partie des un ou plusieurs volets ou languettes élastiques allongés s'étendent substantiellement parallèlement les uns aux autres dans la direction longitudinale de l'organe de retenue (2) et **en ce qu'**un ou plusieurs autres volets ou languettes élastiques allongés s'étendent substantiellement parallèlement les uns aux autres dans une direction substantiellement transversale à la direction longitudinale de l'organe de retenue.

8. Console de centre de véhicule selon l'une quelconque des revendications 1 à 7, **caractérisée en ce que** lesdits un, deux ou plus de deux volets ou languettes élastiques allongés (2a, 2b, 2c,..., 2n) est/sont fabriqués en caoutchouc.

9. Console de centre de véhicule selon l'une quelconque des revendications 1 à 8, **caractérisée en ce que** lesdits un, deux ou plus de deux volets ou languettes élastiques allongés (2a, 2b, 2c,..., 2n) est/sont configurés avec des renforcements (12).

10. Console de centre de véhicule selon l'une quelconque des revendications 1 à 9, **caractérisée en ce que** lesdits un, deux ou plus de deux volets ou languettes élastiques allongés (2a, 2b, 2c,..., 2n) est/sont attachés à l'organe de base (1) par les extrémités desdits volets ou languettes.

11. Console de centre de véhicule selon l'une quelconque des revendications 1 à 10, **caractérisée en ce que** lesdits un, deux ou plus de deux volets ou languettes élastiques allongés (2a, 2b, 2c,..., 2n) est/sont attachés à l'organe de base (1) dans la direction longitudinale desdits volets ou languettes.

12. Console de centre de véhicule selon l'une quelconque des revendications 1 à 11, **caractérisée en ce que** les organes de base et de retenue (1, 2) sont configurés de manière à s'étendre depuis le tableau de bord jusqu'aux dossiers des sièges avant.

13. Console de centre de véhicule selon l'une quelconque des revendications 1 à 11, **caractérisée en ce que** les organes de base et de retenue (1, 2) sont configurés de manière à s'étendre depuis le tableau de bord jusqu'aux sièges arrière.

14. Console de centre de véhicule selon l'une quelconque des revendications 1 à 11, **caractérisée en ce que** les organes de base et de retenue (1, 2) sont configurés de manière à s'étendre depuis le tableau de bord jusqu'aux dossiers des sièges arrière.

15. Console de centre de véhicule selon l'une quelconque des revendications 1 à 14, **caractérisée en ce que** l'organe de base (1) comprend des accoudoirs (5) pour le conducteur et le passager des sièges avant, lesdits accoudoirs étant configurés pour se plier autour de l'organe de retenue (2).
